# EUROPEAN PATENT APPLICATION

(11) **EP 2 156 740 A1**
(43) Date of publication of application: **24.02.2010**
(21) Application number: 09164665.3
(22) Date of filing: 06.07.2009
(51) Int. Cl.: A21C 9/06, A21C 11/00, A21D 13/00

(54) **Method of manufacturing an enveloped food product, product obtainable by said method and apparatus therefor**

(30) Priority: 31.07.2008 EP 08161544
(71) Applicant: Unilever N.V., 3013 AL Rotterdam (NL); Unilever PLC, 100 Victoria Embankment London EC4Y 0DY (GB)
(72) Inventor: Panaioli, Sandro, 04012 Cisterna de Latina (IT); Treggiari, Massimiliano, 04012 Cisterna di Latina (IT)
(74) Representative: Tjon, Hon Kong Guno

(57) **Abstract**

A method of producing an enveloped food product comprising a sealed bread or pastry envelope and a filling contained therein is provided. An apparatus for producing an enveloped food product is also provided.

## Description

This invention relates to a method of manufacturing an enveloped food product and apparatus therefor, in particular an enveloped food product that is able to maintain its shape during manufacture.

Enveloped food products such as calzone pizzas are known in the art. In the manufacture of calzone pizzas, pizza dough ingredients are mixed, the pizza dough is left to prove, a circular pattern is formed from the pizza dough, a filling is placed thereon, the pattern is folded to envelope the filling thereby to form the traditional semi-circular shape of the calzone pizza, the edges are pinched together to provide a seal and the calzone pizza is finally cooked.

A drawback of calzone pizzas is that they are prone to losing their semi-circular shape. It is believed that this is due to two gas-generating effects. Firstly, where the proving step takes place after the folding step as is the case for commercially made, rather than artisan or home made products, carbon dioxide is generated by yeast in the pizza dough during the proving step. Secondly, steam is generated from the filling during the cooking step. There therefore remains a need for a method of producing enveloped food products that are able to maintain their shape during manufacture.

FR 2907316 discloses a process form preparing a foodstuff with sealed edges comprising a cereal dough containing a filling, which comprises preparing a cereal dough, rolling out the dough, preparing a cutout from the dough, placing deep-frozen and measured filling on rolled out dough at the cut-out's centre, moistening the dough and covering the filling by folding and overlapping of two opposite edges, sealing the overlapping edges, closing the ends of the rolled-out dough and optionally cutting across the dough, turning around and placing folded foodstuff with the sealed edges and optionally freezing of the product. The resulting product can be fermented and cooked.

### SUMMARY OF INVENTION

A solution to the aforementioned problem is provided, in a first aspect of the invention, by a method of producing an enveloped food product comprising a sealed bread or pastry envelope and a filling contained therein, the method comprising the steps in the following order of:
a. providing a sheet of dough, the sheet comprising an upper and a lower surface;
b. cutting a pattern from the sheet of dough, the pattern comprising a central section, a first flap bounded by a first edge and a second flap bounded by a second edge, wherein the first and second flaps are arranged in opposition;
c. placing at least one portion of a filling on the upper surface of the central section;
d. folding the first flap over at least a part of the filling leaving a remainder of the filling uncovered, and folding the second flap over the remainder of the filling, thereby to form two conjoined enveloped food products;
e. when the dough does not comprise yeast, sealing the first edge of the first flap and second edge of the second flap to the upper surface of the central section;
f. when the dough comprises yeast, proving the dough in the two conjoined enveloped food products;
g. cooking the two conjoined enveloped food products; and
h. separating the two conjoined enveloped food products by cutting thereby to form two enveloped food products.

For the purposes of this description, dough is defined as bread or pastry dough wherein: bread dough comprises flour and water; leavened bread dough comprises flour, water and yeast; and pastry dough comprises flour and shortening. The flour may be wheat flour, corn flour, rice flour, rye flour and other such flours known to the person skilled in the art.

The filling may be sweet or savoury, in a preferred embodiment the filling is savoury, in a more preferred embodiment the filling is cheese and in a most preferred embodiment the filling is mozzarella cheese. Optionally the filling may be applied to the upper surface of the central section such that a discrete area is left uncovered for the purposes of helping the edges of the first and second flaps to seal to the upper surface of the central section.

A particular advantage of the aforementioned method is that the shape of the enveloped food product is maintained during the manufacturing process. Without wishing to be bound by theory, it is believed that the conjunction of the two enveloped food products means that the forces exerted by the aforementioned carbon dioxide and steam in each enveloped food product when still joined to each other act in opposition, particularly at the area of conjunction, effectively counteracting each other and preventing deformation of the neighbouring edges.

In an alternative embodiment, the present invention provides a method of producing an enveloped food product wherein the central section of the pattern is of a substantially circular shape of area A and the first flap of the pattern and the second flap of the pattern are each of a substantially semi-circular shape each of area B wherein area B is from 40% to 65% of area A, preferably from 43% to 60% of area A and more preferably from 45% to 55% of area A. It has been observed that shape loss is particularly pronounced in enveloped food products that are semi-circular in shape. This method is therefore particularly apt for the prevention of shape loss in enveloped food products such as calzone pizzas that have this shape. Without wishing to be bound by theory, it is believed that the conjunction of the two semi-circular enveloped food products serves to bring the linear edge of the first flap and the linear edge of the second flap into close proximity and the forces exerted by the aforementioned carbon dioxide and steam in each enveloped food product when still joined to each other act in opposition on these linear edges therefore effectively cancelling each other out and preventing deformation.

In a further embodiment, the present invention provides a method of producing an enveloped food product wherein cutting of the two conjoined enveloped food products is accomplished using an ultrasonic knife. A particular advantage of using an ultrasonic knife to accomplish the cutting is that it causes the cut edges to reseal. Thus in an embodiment of the invention where a filling is applied to the upper surface of the central section without the need to retain an uncovered area for the purposes of facilitating sealing of the edges of the first and second flaps to the upper surface of the central section, use of an ultrasonic knife prevents leakage of the filling from the cut edges of the enveloped food products. Alternative cutting techniques such as guillotining and cutting rollers may be used when the cut edges do not require resealing.

In another embodiment, the present invention provides a method of producing an enveloped food product wherein a coating is optionally applied to an upper surface of the two conjoined enveloped food products. The coating may be sweet or savoury, in a preferred embodiment the coating is savoury and in a more preferred embodiment the coating comprises tomato pulp. Optionally the coating may be dispensed with.

In yet another embodiment, the present invention provides a method of producing an enveloped food product comprising an additional step of freezing the enveloped food product.

In a second aspect of the invention, an apparatus for producing an enveloped food product is provided, the apparatus comprising in the sequence set forth herein below:
a. a roller for producing the sheet of dough;
b. a first cutter for cutting the pattern from the sheet of dough;
c. at least one filling dispenser for placing at least one filling on the upper surface of the central section
d. a first mechanical means for folding the first flap over at least a part of the filling leaving a remainder of the filling uncovered and a second mechanical means for folding the second flap over the remainder of the filling, thereby to form two conjoined enveloped food products;
e. a third mechanical means for sealing the edge of the first flap and the edge of the second flap to the upper surface of the central section when the dough does not comprise yeast;
f. a proving oven for proving the dough in the two conjoined enveloped food products when the dough comprises yeast;
g. optionally a coating dispenser for applying a coating to the upper surface of the two conjoined food products;
h. a baking oven for cooking the two conjoined enveloped food products; and
i. a second cutter for separating the two conjoined enveloped food products thereby to form two enveloped food products.

The first mechanical means and second mechanical means for folding the first and second flaps may comprise folding fingers. The third mechanical means for sealing the edges of the first and second flaps to the upper surface of the central section may comprise a shaped flange.

In an alternative embodiment, the aforementioned apparatus comprises a second cutter which is an ultrasonic knife.

In a further embodiment the aforementioned apparatus comprises a freezer for freezing the enveloped food product.

In a third aspect of the invention, an enveloped food product is provided that is obtained or obtainable by the abovementioned methods.

In a forth aspect of the invention, an enveloped food product comprising a sealed bread or pastry envelope and a filling contained therein is provided that is able to maintain its shape during manufacture.

According to the invention, such a food product preferably is a food product comprising two conjoined parts arranged in opposition, each part comprising an envelope of bread or pasty dough containing a filling. This preferred type of product has not been cut yet in two separate enveloped products, but the enveloped parts are connected to each other as a result of the folding of the first and the second flap of dough over the two respective fillings and sealing the flaps to the upper surface of the central section on a discrete area that is left uncovered with filling. During the cooking step, this food product maintains its shape. Preferably, the product is prepared from one piece of dough and folded in the way as has been described above.

The invention further relates to a food product according ot the invention, wherein the food product has been cooked. Preferably, cooking is conducted in an oven, as known to a person in the art.

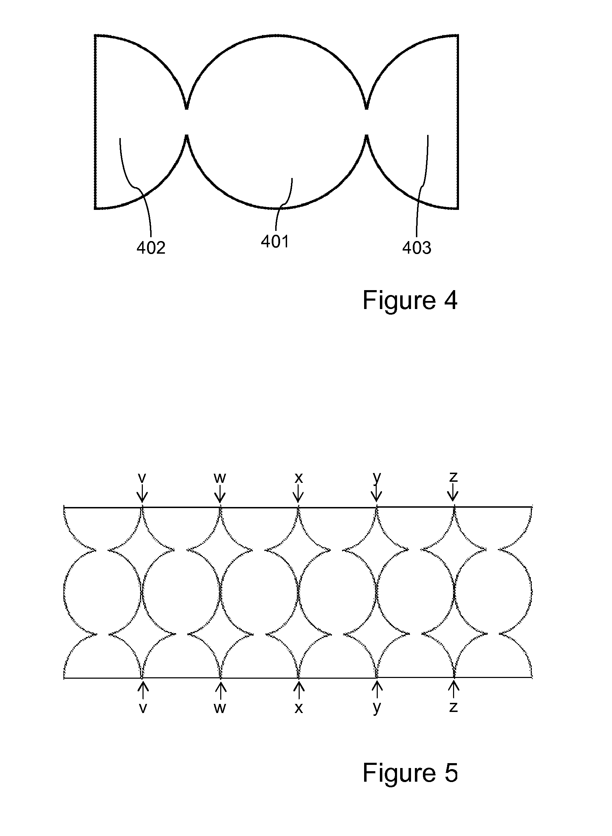

As described above, the invention may preferably relate to a multiple food product comprising two or more of the food products described above, wherein the food products are serially connected to each other. As illustrated in figure 5, to this end the dough may be cut in such a way that a plurality of patterns is connected. This facilitates industrial production of the product of the present invention. The person skilled in the art will understand how many patterns can be practically connected to each other. It might range from 2 to 20, preferably form 4 to 10, more preferably from 6 to 8.

In a preferred arrangement, the food product according to the invention comprises a pizza, preferably, a pizza of the type that has been folded in two. In case the food product is a non-separated product comprising two conjoined parts, it is intended that each part represents a pizza, and that two pizzas are conjoined. In case the food product represents a multiple food product, a series consisting of units of two conjoined pizzas is meant.

### SUMMARY OF THE DRAWINGS

The invention is exemplified hereinbelow with reference to the figures wherein:
Figure 1 shows a plan view of a rectangular pattern cut from a sheet of dough in accordance with the invention.
Figure 2 shows a plan view of the rectangular pattern of figure 1 with at least one portion of a filling in accordance with the invention.
Figure 3 shows a perspective view of the rectangular pattern of figure 2 in a partially folded state in accordance with the invention.
Figure 4 shows a plan view of an alternative pattern cut from a sheet of dough in accordance with the invention.
Figure 5 shows a plurality of patterns in accordance with figure 4 in a conjoined state cut from a single sheet of dough in accordance with the invention.
Figure 6 shows an apparatus in accordance with the invention for producing an enveloped food product.

### DETAILED DESCRIPTION

### Example 1

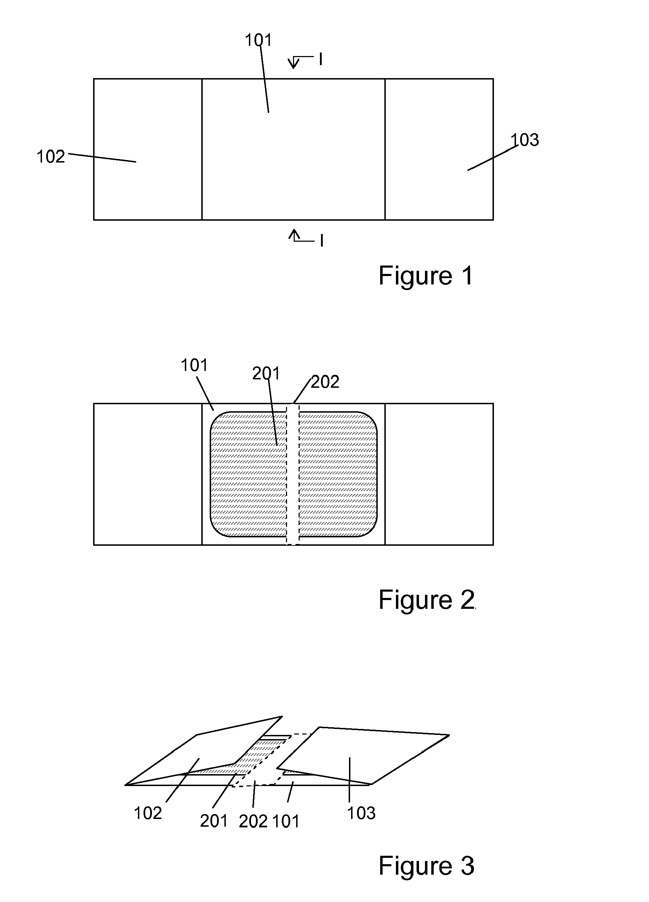

A calzone pizza was prepared by combining wheat flour (50g), sugar (2.5g), water (41 g), malt extract (0.5g), salt (0.5g), yeast (0.5g) and margarine (5g) using techniques known to the person skilled in the art thereby to form a bread dough. The dough was then rolled thereby to produce a sheet of dough. The sheet of dough was cut to provide a pattern as illustrated in figure 1, comprising a central section 101, a first flap 102 and a second flap 103, wherein the first and second flaps are arranged in opposition.

As illustrated in figure 2, a filling 201 of mozzarella cheese was placed on the upper surface of the central section 101. A central area 202 of the central section 101 was kept free of filling to facilitate the sealing of the first edge of the first flap and second edge of the second flap to the upper surface of the central section.

The first flap 102 was then folded over a part of the filling 201 leaving a remainder of the filling uncovered, and the second flap 103 was then folded over the remainder of the filling 201, thereby to form two conjoined enveloped food products. The pattern of figure 2 is shown in a partially folded state in figure 3.

The dough was proven in a proving oven for 30 minutes at a relative humidity of 85% and a temperature of 40°C to leaven the dough and to allow the edges of the first flap 102 and second flap 103 to seal to the upper surface of the central section 101.

A coating comprising extra virgin olive oil (6g), onion (4g), garlic (2g), tomato pulp (80g), granda padano cheese (7g), and salt (1g) was prepared using techniques known to the person skilled in the art and then applied to the upper surface of the two conjoined enveloped food products thereby to form two coated conjoined enveloped food products.

The two coated conjoined enveloped food products were then cooked in a baking oven for a period of 110 seconds at a temperature of 300°C with an airspeed of 25 metres per second.

Thereafter the two coated conjoined enveloped food products were removed from the baking oven and separated wherein the cutting was accomplished using an ultrasonic knife to cut along the line I to I thereby to form two enveloped food products.

### Example 2

Unleavened bread dough was prepared by combining wheat flour (50g), water (41g), and salt (0.5g) using techniques known to the person skilled in the art. An enveloped food product was produced in accordance with the method set forth in example 1 except that unleavened bread dough was used and the proving step was omitted and replaced by a sealing step whereby the edges of the first flap 102 and second flap 103 were sealed to the upper surface of the central section 101 by the application of pressure using a shaped flange.

### Example 3

As illustrated in figure 4, an alternative pattern was cut from a sheet of dough that provided for a traditional semi-circular shaped enveloped food product wherein the central section 401 was of a substantially circular shape of area A and the first flap 402 and the second flap 403 were each of a substantially semi-circular shape each of area B, wherein A≈2B.

### Example 4

As illustrated in figure 5 a plurality of conjoined patterns according to example 3 were provided from a single sheet of dough for the continuous production of the enveloped food product wherein the plurality of patterns were cut from the single sheet of dough and the patterns were themselves separated by cutting along lines v to v, w to w, x to x, y to y and z to z.

### Example 5

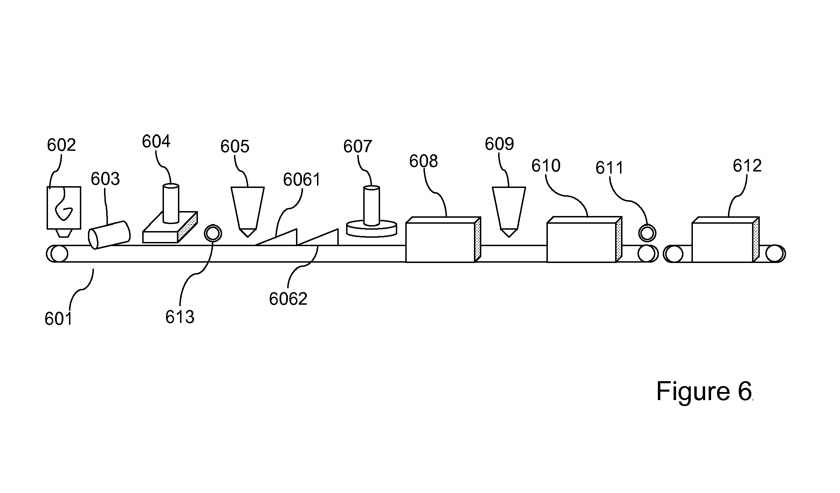

Calzone pizza can be produced using an apparatus as illustrated in figure 6 comprising: an endless belt conveyer 601, a dough mixer 602, a roller 603, a first cutter 604 for providing a plurality of conjoined patterns according to example 5, a second cutter 613 to separate said conjoined patterns, one or more filling dispensers 605, a first mechanical means 6061 for folding the first flap, a second mechanical means 6062 for folding the second flap, a third mechanical means 607 for sealing the edges of the first and second flaps to the upper surface of the central section when the dough does not comprise yeast, a proving oven 608 for proving the dough when the dough comprises yeast, a coating dispenser 609, a baking oven 610 for cooking the two conjoined enveloped food products, a third cutter 611 for separating the two conjoined enveloped food products thereby to form two enveloped food products, and a freezer 612 for storing the enveloped food products.

In use, pizza dough ingredients comprising wheat flour (500g), sugar (25g), water (410g), malt extract (5g), salt (5g), yeast (5g) and margarine (50g) were added to the dough mixer 602 thereby to form dough which was extruded from the dough mixer 602 onto the endless belt conveyer 601 thereby to convey the dough towards the roller 603. The dough was rolled by the roller 603 thereby to form a sheet of dough that was first cut with the first cutter 604 thereby to provide a plurality of conjoined patterns according to example 4 and then conveyed to the second cutter 613 thereby to separate said conjoined patterns. The patterns were conveyed to the filling dispenser 605 which dispensed a filling of mozzarella cheese onto the central section of the pattern. The first flap was then folded by the first mechanical means 6061 comprising folding fingers that folded the first flap over a part of the filling leaving a remainder of the filling uncovered. The second flap was then folded by the second mechanical means 6062 comprising folding fingers that folded the second flap over the remainder of the filling, thereby to form two conjoined enveloped food products. The two conjoined enveloped food products were conveyed to the proving oven 608 for proving at a relative humidity of 85% and a temperature of 40°C for a time of 30 minutes. A coating comprising extra virgin olive oil (6g), onion (4g), garlic (2g), tomato pulp (80g), granda padano cheese (7g), and salt (1g) was added to an upper surface of the two conjoined enveloped food products from the coating dispenser 609 and the two coated conjoined enveloped food products were conveyed to the baking oven 610 and cooked for a period of 110 seconds at a temperature of 300°C with an airspeed of 25 metres per second. The two conjoined enveloped food products were then conveyed from the baking oven 610 and separated using the ultrasonic knife 611 thereby to form two enveloped food products. The enveloped food products were allowed to cool at room temperature and conveyed to a freezer 612 for storage.

### Example 6

The abovementioned apparatus was used to produce an enveloped food product comprising unleavened bread dough comprising wheat flour (500g), water (410g), and salt (5g). In this embodiment the proving oven 608 was bypassed and a third mechanical means 607 was used to seal the edges of the first and second flaps to the upper surface of the central section. This third mechanical means 607 was a shaped flange that applied pressure to the edges of the first and second flaps to force them into contact with the upper surface of the central section thereby to seal the edges.

## Claims

1. A method of producing an enveloped food product comprising a sealed bread or pastry envelope and a filling contained therein, the method comprising the steps in the following order of:
a. providing a sheet of dough, the sheet comprising an upper and a lower surface;
b. cutting a pattern from the sheet of dough, the pattern comprising a central section, a first flap bounded by a first edge and a second flap bounded by a second edge, wherein the first and second flaps are arranged in opposition;
c. placing at least one portion of a filling on the upper surface of the central section;
d. folding the first flap over at least a part of the filling leaving a remainder of the filling uncovered, and folding the second flap over the remainder of the filling, thereby to form two conjoined enveloped food products;
e. when the dough does not comprise yeast, sealing the first edge of the first flap and the second edge of the second flap to the upper surface of the central section;
f. when the dough comprises yeast, proving the dough in the two conjoined enveloped food products;
g. cooking the two conjoined enveloped food products; and
h. separating the two conjoined enveloped food products by cutting thereby to form two enveloped food products, wherein the cutting is performed using an ultrasonic knife.

2. A method of producing an enveloped food product comprising a sealed bread or pastry envelope and a filling contained therein, the method comprising the steps in the following order of:
a. providing a sheet of dough, the sheet comprising an upper and a lower surface;
b. cutting a pattern from the sheet of dough, the pattern comprising a central section, a first flap bounded by a first edge and a second flap bounded by a second edge, wherein the first and second flaps are arranged in opposition;
c. placing at least one portion of a filling on the upper surface of the central section, wherein a discrete area is left uncovered to help the edges of the first and second flaps to seal to the upper surface of the central section;
d. folding the first flap over at least a part of the filling leaving a remainder of the filling uncovered, and folding the second flap over the remainder of the filling, thereby to form two conjoined enveloped food products;
e. when the dough does not comprise yeast, sealing the first edge of the first flap and the second edge of the second flap to the upper surface of the central section;
f. when the dough comprises yeast, proving the dough in the two conjoined enveloped food products;
g. cooking the two conjoined enveloped food products; and
h. separating the two conjoined enveloped food products by cutting thereby to form two enveloped food products.

3. A method of producing an enveloped food product according to any of the preceding claims wherein the central section is of a substantially circular shape of area A and the first flap and second flap are each of a substantially semi-circular shape each of area B, wherein area B is from 40% to 65% of area A.

4. A method of producing an enveloped food product according to any one of the preceding claims wherein a coating is optionally applied to an upper surface of the two conjoined enveloped food products.

5. A method of producing an enveloped food product according to any one of the preceding claims comprising an additional step of freezing the enveloped food product.

6. An apparatus for producing an enveloped food product prepared according to any one of the preceding claims, the apparatus comprising in the sequence set forth herein below:
a. a roller for producing the sheet of dough;
b. a first cutter for cutting the pattern from the sheet of dough;
c. at least one filling dispenser for placing at least one filling on the upper surface of the central section
d. a first mechanical means for folding the first flap over at least a part of the filling leaving a remainder of the filling uncovered and a second mechanical means for folding the second flap over the remainder of the filling, thereby to form two conjoined enveloped food products;
e. a third mechanical means for sealing the edge of the first flap and the edge of the second flap to the upper surface of the central section when the dough does not comprise yeast;
f. a proving oven for proving the dough in the two conjoined enveloped food products when the dough comprises yeast;
g. optionally a coating dispenser for applying a coating to the upper surface of the two conjoined food products;
h. a baking oven for cooking the two conjoined enveloped food products; and
i. a second cutter for separating the two conjoined enveloped food products thereby to form two enveloped food products.

7. An apparatus according to claim 6 wherein the second cutter is an ultrasonic knife.

8. An apparatus according to claim 6 or claim 7 wherein the apparatus further comprises a freezer for freezing the enveloped food product.

9. An enveloped food product obtainable by the method of claims 1 to 5.

10. Food product comprising two conjoined parts arranged in opposition, each part comprising an envelope of bread or pasty dough containing a filling.

11. Food product according to claim 10, wherein the food product has been cooked.

12. Multiple food product comprising two or more of the food products according to claim 10 or 11, the food products according to claim 10 or 11 being serially connected to each other.

13. Food product according to any of claims 9 to 12, wherein the food product comprises a pizza.
